# EUROPEAN PATENT SPECIFICATION

(11) **EP 2 185 850 B1**
(45) Date of publication and mention of the grant of the patent: **23.04.2014**
(21) Application number: 08784465.0
(22) Date of filing: 20.08.2008
(51) Int. Cl.: F16L 11/08

(54) **A FLEXIBLE PIPE**
FLEXIBLES ROHR
TUYAU SOUPLE

(30) Priority: 23.08.2007 DK 200701203
(43) Date of publication of application: 19.05.2010
(73) Proprietor: National Oilwell Varco Denmark I/S, 2605 Brøndby (DK)
(72) Inventor: GUDME, Jonas, DK-2610 Rødovre (DK)
(74) Representative: Hegner, Anette
(86) International application number: PCT/DK2008/050207
(87) International publication number: WO 2009/024156

(56) References cited:
- WO-A-02/42673
- FR-A- 2 268 614
- US-A- 5 669 420
- US-A- 6 145 546
- US-B1- 6 338 365
- US-B1- 6 415 825
- US-B2- 6 668 867

## Description

### TECHNICAL FIELD

The invention relates to a flexible pipe which can be used for transportation of fluids and gasses, and in particular a flexible pipe of the type which is useful in water transportation, and in offshore transportation of crude oil e.g. from seabed to an installation or between installations.

### BACKGROUND ART

The flexible pipes for offshore use are often unbonded pipes. In this specification the term "unbonded" means that at least two of the layers of the pipe are not bonded to each other. Often unbonded flexible pipes comprise an internal sheath (often called "inner liner") which forms a barrier against the outflow of the fluid which is conveyed through the pipe, and one or more armouring layers on the outer side of the internal sheath (outer armouring layer(s)). The flexible pipe may comprise additional layers such as a carcass which is an inner armouring layer to prevent the collapse of the internal sheath. An outer sheath may be provided with the object of forming a barrier against the ingress of fluids from the pipe surroundings to the armouring layers. In practice the pipe will normally comprise at least two armouring layers, which are not bonded to each other directly or indirectly via other layers along the pipe. Thereby the pipe becomes bendable and sufficiently flexible to roll up for transportation.

Typical unbonded flexible pipes are e.g. disclosed in WO0161232A1 US 6123114 and US 6085799.

The above-mentioned type of flexible pipes is used, among other things, for off-shore as well as some on-shore applications for the transport of fluids and gases. Flexible pipes can e.g. be used for the transportation of fluids where very high or varying water pressure exists along the longitudinal axis of the pipe, such as riser pipes which extend from the seabed up to an installation on or near the surface of the sea, pipes for transportation of liquid and gases between installations, and pipes which are located at great depths on the seabed (flow lines).

Flow lines work mainly in static mode, whereas risers including flexible pipes between installations where the pipes are not laid on or below the seabed work essentially in dynamic mode. The invention relates both to pipes working in static mode and in dynamic mode.

The flexible pipes used offshore must be able to resist high internal pressures and/or external pressures and also withstand longitudinal bending or twisting without the risk of being ruptured. For high strength pipes the outer armouring layers normally comprise a pressure vault which is resistant mainly to the pressure developed by the fluid in the sealing sheath and consisting of the winding of one or more interlocked metal profile wires wound in a helix with a short pitch around the internal sheath and at least one tensile armouring layer (and generally at least two crossed tensile armouring layers) of wires whose lay angle measured along the longitudinal axis of the pipe is significantly less than the lay angle of the pressure vault, e.g. less than 70°.

The pressure vault should be designed to provide the pipe with sufficient pressure strength against bursting while simultaneously providing a desired degree of flexibility. Furthermore the pressure vault in particular in dynamic application should be resistant to fatigue caused by the rubbing due to dynamic stress under laying out of the pipe and during use. The interlocked wires of prior art pressure vaults are therefore normally designed such that there is a certain space or interstice, hereafter called "gap", between the interlocked wires.

For deep-sea applications, it is generally sought to have moment of inertia at the pressure vault so as also to withstand the external pressure. In this case, the profile wire constituting the pressure vault has a relatively large height which is the height measured in radial direction from the longitudinal axis of the pipe.

Generally the high weight of the flexible pipe is undesired both due to high transportation cost and material cost, but also due to the pull in the pipe during lay out and in the riser pipes in general.

US 6,840,286 and US 6,668,867 describe flexible pipes where the pressure vault has been made from metal strips which have been folded to have a desired cross-sectional folded profile with trapezoidal box section(s) and which are interlocked by an edge of the metal strip. In US 6,840,286 the pressure vault is composed of two types of metal strips, wherein one of them is folded to have a cross-sectional folded profile with 2 trapezoidal box sections and the other metal strip is slightly bended to hold together trapezoidal box sections of the folded strip in consecutive winding thereof to limit the gap between these consecutive windings. In US 6,668,867 the pressure vault is composed of one type of metal strip, which is folded along one of its edges to have a profile with 1 trapezoidal box section and a bulge, and where the other of the edges is free, the free edge is slightly bent to engage the bulge of the in consecutive winding thereof.

The pressure vault provided by strips as described above solves many of the above discussed objects. However, the engagement and the strength of the engagement provided by the strips in the pressure vaults described in US 6,840,286 and US 6,668,867 have been found to be insufficient and unreliable.

US 5 669 420 (embodiment of fig. 2) discloses a smooth bore flexible tubular conduit on which is based claim 1.

The object of the invention is to provide a flexible pipe with a pressure vault, which is improved compared to the flexible pipes described above. In particular it is an object to provide a flexible pipe with a pressure vault which is simple and cost effective to produce, and has the necessary strength for both static and dynamic applications.

This object has been achieved by the invention as claimed.

### DISCLOSURE OF INVENTION

It should be emphasized that the term "comprises/comprising" when used in this specification is taken to specify the presence of stated features, integers, steps or components but does not preclude the presence or addition of one or more other stated features, integers, steps, components or groups thereof.

A folded strip is herein defined as an in principle endless unit with at least one fold and a width which in unfolded condition is at least 6 times its thickness, such as at least 10, such as at least 15, such as at least 25 times its thickness or even up to 100 or 500 times its thickness. The term 'endless' is used to indicate that the tapes and profiles are very long compared to their other dimensions.

The flexible pipe of the invention comprises a plurality of layers surrounding a longitudinal axis of the pipe, the plurality of layers comprising an internal sheath and one or more armouring layers which may include an inner armouring layer also called a carcass.

In most situation the longitudinal axis of the pipe will be a longitudinal axis of the pipe, namely in situations where the flexible pipe is for transportation of fluids. In some situations the longitudinal axis of the pipe is not hollow, namely in situations where the flexible pipe in an umbilical.

An umbilical is a type of flexible pipe which is used for the transport of process liquids and hydraulic oil and for the carrying of light and power from an installation positioned at the surface of the sea and down to the oil wells on the seabed. Umbilicals are not directly involved in the transport of oil and gas, but may be necessary for the supply of the process liquids which, as mentioned, are to be used for the recovery of oil, as well as for the running of hydraulic pipes, electrical wires, fibre optics, etc. Umbilicals may be combined with an oil/gas transporting pipe e.g. a riser to form an integrated production umbilical or an integrated service umbilical.

The flexible pipe comprises a pressure vault surrounding and preferably supporting the internal sheath. The pressure vault may preferably be applied directly onto the internal sheath optionally with a film layer in between. The pressure vault comprises at least one helically wound folded metal strip, which folded metal strip is interlocked with itself in consecutive windings or interlocked with another helically wound metal strip. The at least one folded metal strip is folded along both of its edges to form protruding edge sections of two or more strip material layers, each of said protruding edge sections protrudes in one of the directions towards or away from the longitudinal axis of the pipe.

Due to the interlock provided by the protruding edge sections of the folded strips the pressure vault is provided with a high strength while simultaneously being very flexible. Furthermore, the pressure vault is very simple to produce and apply, and the cost of the pressure vault is very beneficial compared with the cost of prior art pressure vaults.

As it will be clear from the following description various embodiments of the invention provide additional benefits.

As mentioned above the flexible pipe of the invention may have one or more armouring layers including at least one pressure vault. The number and the placement of armouring layer or layers may e.g. be as it is well known from prior art described above as well as the prior art disclosed in US 7,124,780, US 6,354,333, US 5,813,439 and WO 01/81809. Other layers than the pressure vault may e.g. be well known e.g. as described in the above prior art as well as in any of the publications US 6691743, US 6668867, WO 0242674, US 5730188, US 4549581, US 6192941, US 6283161, WO 0036324, US 6454897, US 6408891 and US 6110550.

The flexible pipe of the invention may preferably comprise one or more tensile armouring layers. In one embodiment the flexible pipe comprises two or more tensile armouring layers wound onto the pressure vault. The two tensile armouring layers (also referred to as traction armouring layers) may e.g. be of wound wires, e.g. cross wound at angles of 25-40, and 70-80 degrees, respectively.

Any degrees mentioned herein should be taken to mean degrees in relation to the centre axis of the pipe unless otherwise specified.

An inner armouring layer (carcass) is an armouring layer which is placed inside the internal sheath and has the main purpose of preventing crushing of the pipe due to external forces. An inner armouring layer may be placed in direct contact with the inner side of the internal sheath or one or more material layers e.g. a film and/or an insulating layer may be placed between the inner side of the internal sheath and the inner armouring layer.

An outer armouring layer is an outer armouring layer placed outside the internal sheath and has the main purpose of resisting pressure forces due to internal forces (pressure vault) and/or resisting traction forces due to both external and external forces (tensile armour). Typically a flexible pipe will comprise at least two outer armouring layers. An innermost outer armouring layer, preferably the pressure vault, may be placed in direct contact with the outer side of the internal sheath or one or more material layers e.g. a film may be placed between the outer side of the internal sheath and the pressure vault. If the pipe comprises two or more outer armouring layers, these outer armouring layers may be placed in direct contact with each other or the two or more outer armouring layers may independently of each other be separated by one or more material layers e.g. film layer(s), intermediate sheath(s), insulation sheath(s) or similar.

For protection the flexible pipe may comprise an outer sheath, preferably of a polymer layer.

The flexible pipe of the invention may comprise additional layers such as it is well known in the art, e.g. insulation layers of polymers, composite, cork or other, intermediate polymer sheaths or films and etc.

In the following the term 'folded metal strip' should mean 'at least one folded metal strip' unless otherwise specified.

The directions towards or away from the longitudinal axis of the pipe should be taken to mean the radial directions toward the longitudinal centre axis of the pipe.

The edge sections of the folded metal strip should be taken to mean the two opposite edge sections extending essentially in the length direction of the strip and comprising at least one fold capable of engaging with a flange of the profile.

The flexible pipe may in principle comprise any number of helically wound folded metal strips Nₛ. Nₛ may for example be 10 or less, e.g. 1-5.

In one embodiment the pressure vault consists essentially of helically wound and interlocked metal strip(s). In other embodiments the pressure vault may comprise other elements such as a hoop layer described below.

The pressure vault may in one embodiment be wound from one helically wound and interlocked metal strip. In other embodiments the pressure vault is wound from two or more helically wound and interlocked metal strips, the metal strips being identical or different from each other.

The helically wound folded metal strip(s) may preferably be wound with a winding angle of 70-90 degrees with respect to the longitudinal axis of the flexible pipe. The winding angle should preferably be essentially identical for all the helically wound folded metal strip(s) if there is more than one.

According to the invention the folded metal strip is folded along both of its edges to form protruding edge sections of two or more strip material layers, each of said protruding edge sections protrudes in one of the directions towards or away from the longitudinal axis of the pipe. Preferably these protruding edge sections of one or more folded metal strips are engaged with each other to provide the interlocked structure.

In one embodiment a first of said protruding edge sections of one or more folded metal strips is engaged with a second edge section of one or more folded metal strips. The engagement may preferably be provided by the protruding of the first edge section protruding towards the longitudinal axis of the pipe and the protruding of the second edge section protruding away from the longitudinal axis of the pipe.

It is preferred that the engaged protruding edge sections are not folded into each others folds, so that the folded metal strip may be prefolded prior to the winding thereof onto the pipe. This makes the application of the folded metal strip very simple since the protruding edge sections need not being co-folded (folded together during winding). Furthermore any risk of tearing co-folded strips apart is avoided.

In one embodiment the pressure vault comprises at least a first folded metal strip with protruding edge sections protruding in the direction towards the longitudinal axis of the pipe, and at least a second folded metal strip with protruding edge sections protruding in the direction away from the longitudinal axis of the pipe, wherein the protruding edge sections of the first folded metal strip are engaged with the protruding edge sections of the second folded metal strip. The first folded metal strip may preferably be arranged to hold together consecutive windings of said second folded metal strip by engagement of said protruding edge sections. In this embodiment the number of first folded metal strips and the number of second folded metal strips should preferably be identical. In one embodiment there is one single first folded metal strip and one single second folded metal strip, the first and the second folded metal strip being helically wound and interlocked with each other.

The first folded metal strip(s) and the second folded metal strip(s) may preferably be identical, but turned in opposite direction of each other so that the protruding edge sections protrude in opposite directions. This makes the pressure vault even simpler to produce.

In one embodiment the pressure vault comprises at least a folded metal strip with a first protruding edge section protruding in the direction towards the longitudinal axis of the pipe, and a second protruding edge sections protruding in the direction away from the longitudinal axis of the pipe. In this embodiment the pressure vault may comprise or be provided by one single folded metal strip. Alternatively the pressure vault may comprise two or more folded metal strips which may be identical or different from each other.

In this embodiment the first protruding edge section is preferably engaged with said second protruding edge section in a subsequent winding of said folded metal strip. In an embodiment where the pressure vault comprises at least at least two folded metal strips, the first and said second protruding edge sections are engaged with a protruding edge section of one or more other folded metal strips.

The folded metal strip may in principle be folded to form the protruding edge sections with any shape, provided that it can engage itself in consecutive windings or interlock with another helically wound metal strip. In one embodiment the folded metal strip is folded against itself at least along one of its edges to form at least one edge section protruding in one of the directions towards or away from the longitudinal axis of the pipe.

The metal strip may preferably be folded to provide 3 or more strip material layers along both of its edges to form at least two edge sections, each protruding in one of the directions towards or away from the longitudinal axis of the pipe.

The folding direction and the protruding direction may be essentially the same or they may be essentially opposite each other. The folding direction means the direction perpendicular to the surface of the non-folded part of the edge section of the folded metal strip and towards the folded part of the edge section.

In most situations it is desired that the folding direction and the protruding direction are essentially the same.

The folded metal strip should preferably be folded at least along one of its edges in at least two folds to form at least one protruding edge section having 3 or more layers.

'One fold' means that the edge part is folded one time to form a two layered edge section.

The folded metal strip may in one embodiment be folded against itself in at least along one of its edges in at least one fold, such as two or even more folds to form at least one edge section, where the edge section comprises two or more layers of strip material.

In one embodiment the folded metal strip is folded at least along one of its edges so that a secondary element is integrated into the folding. The secondary material may in principle be any kind of material, such as a reinforcement element. In one embodiment the secondary element integrated into the fold is a fiber such a fiber sensor, e.g. for sensing stress, and or temperature or properties of the pipe or pipe elements. A suitable sensor is the sensor as described in US 7,024,941.

The secondary element may preferably be an oblong element extending in essentially the whole length of the folded strip.

In one embodiment the secondary element integrated into the fold is a reinforcement element, such as an oblong metal element onto which the metal strip is folded to form a reinforced edge section. The reinforcement element may have any shape. In one embodiment the reinforcement element has a cross sectional profile which is essentially uniform along its length, the profile preferably being selected from round, ellipsoidal, semi ellipsoidal, quadrilateral polygonal, square, rectangular and trapezoidal shapes, where any edges optionally being rounded. By providing such reinforcement element integrated into the fold the strength of the pressure vault may be increased.

The folded metal strip may preferably be folded to form two edge sections and a non-folded mid-section between the two edge sections.

The non-folded mid-section may in principle have any shape and thickness within the limitation of a strip. However, in general it is preferred that the non-folded mid-section is essentially flat in order to allow a desired play between engaged profiled wires and folded metal strips.

In one embodiment the non-folded mid-section has an essentially uniform thickness.

The optimal thickness of the folded metal strip depends largely on the size of pipe, the intended use of the pipe and the strength of the metal used for the folded metal strip. If the pipe is large, the thickness of the folded metal strip should preferably be relatively large as well, e.g. even up to 16 mm. If the pipe is to be used as a riser, the thickness of the folded metal strip may preferably be larger than if the pipe is to be used as a flow line.

In most situations a thickness of the folded metal strip of about 5 mm or even about 2 mm is sufficient.

In one embodiment the non-folded mid-section has a non-folded thickness Tₙₛ of 0.2 -5 mm, such as 0.2-2 mm.

The folded layers of the edge section of the folded metal strip may e.g. have a thickness which is different from the non-folded mid-section. Thus in one embodiment the folded layers of the edge section of the folded metal strip have a thickness of between 0.5 and 1.5 times the thickness of the non-folded mid-section. In principle the edge sections may thus each have an edge section thickness T_{fs} of down to one time the thickness of the non-folded mid-section Tₙₛ. However, in practice it is desired that the edge sections are thicker than the non-folded mid-section Tₙₛ.

In one embodiment the edge sections each has an edge section thickness T_{fs} of 1.5 to 10 times the thickness of the non-folded mid-section Tₙₛ, such as of 3-4 times the thickness of the non-folded mid-section Tₙₛ.

The profiled wire comprises a base with a first and a second face placed respectively away from and towards the longitudinal axis of the pipe.

In one embodiment the metal strip is folded from a metal strip having deformation lines along its edge sections for providing the fold. This may particularly be beneficial if the strip is 4 mm or thicker because the folding may be easier along such deformation line. In the deformation line the thickness may e.g. be reduced to from 0.1 to 0.9 of its thickness.

In order to increase the moment of inertia, the pressure vault may in one embodiment comprise a hoop layer. The hoop layer may preferably be wounded onto the helically wound metal strip(s).

In one preferred embodiment the hoop layer is provided by at least one helically wound wire (hoop wire). The wire may preferably be helically wound onto the helically wound, folded metal strip with a winding angle with respect to the longitudinal axis of the pipe which is essentially equal to the winding angle of said helically wound, folded metal strip. Thereby a very balanced and strong structure can be obtained. Furthermore the hoop wire may be wound onto the pipe in the same production step as winding the folded metal strip.

The hoop wire may have any shape, which is preferably essentially identical along its length. In one embodiment the hoop wire has a cross sectional profile selected from round, ellipsoidal, semi ellipsoidal, quadrilateral polygonal, square, rectangular and trapezoidal shapes, where any edges optionally may be rounded.

The windings of the wound hoop wire should preferably not be interlocked to each other. Thereby both the production and the application of the hoop wire are simplified.

In one embodiment the folded metal strip(s) forms at least one strip layer, and the strip layer comprises a ridge on at least one of the helically wound folded metal strips. The ridge protrudes radially outwards from the longitudinal axis of the pipe. The hoop wire(s) is applied so that the ridge protrudes at least partly in between at least some of the consecutive windings of the wire(s). Thereby the hoop may be held in position relative to the winding of the strip layer and risk of lateral displacement of the hoop wire may be reduced.

In one embodiment the strip layer comprises at least a first folded metal strip with protruding edge sections protruding in the direction towards the longitudinal axis of the pipe, and at least a second folded metal strip with protruding edge sections protruding in the direction away from the longitudinal axis of the pipe, wherein the first folded metal strip comprises a ridge protruding radially outwards from the longitudinal axis of the pipe, the hoop wire(s) being applied so that the ridge protrudes at least partly in between at least some of the consecutive windings of the wire(s). This embodiment provides a particular stable pressure vault.

The hoop layer may be of any material having a sufficient strength. It may be hollow or solid. Preferably the hoop is made from composite materials and/or metal, such as steel or a steel alloy, e.g. a duplex steel.

The folded metal strip may preferably be of metal selected from steel and steel alloy, e.g. a duplex steel.

### BRIEF DESCRIPTION OF DRAWINGS

The invention will be explained more fully below in connection with a preferred embodiment and with reference to the drawings in which:
Fig. 1 is a schematic side view of a pipe with a carcass.
Fig. 2 is a schematic side view of a pipe without a carcass.
Figs. 3a - 3m are schematic cross sectional side views of a different folded metal strips, which can be a part of a pressure vault of the flexible pipe of the invention.
Fig. 4 is a schematic cross sectional side view of a first pressure vault made from interlocked folded strips.
Fig. 5 is a schematic cross sectional side view of a second pressure vault made from interlocked folded strips.
Fig. 6 is a schematic cross sectional side view of a third pressure vault made from interlocked folded strips and a hoop layer.
Fig. 7 is a schematic cross sectional side view of fourth pressure vault made from interlocked folded strips and a hoop layer.

The figures are schematic and simplified for clarity, and they just show details which are essential to the understanding of the invention, while other details are left out. Throughout, the same reference numerals are used for identical or corresponding parts.

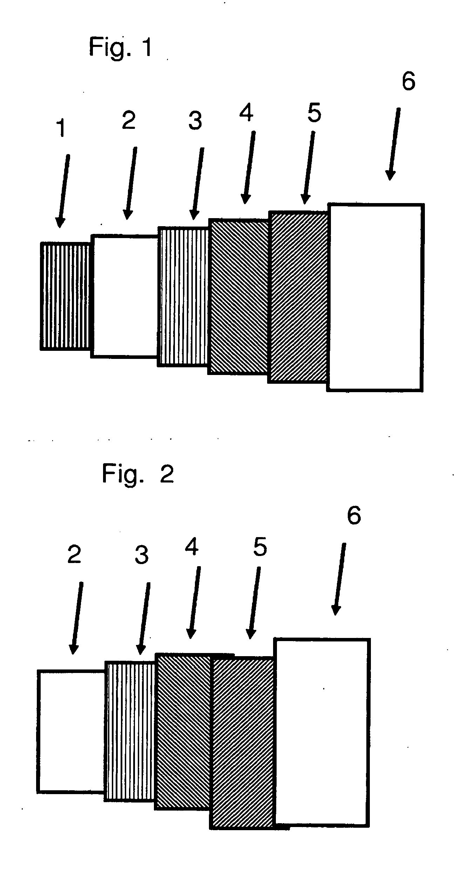

The flexible pipe shown in fig. 1 comprises an internal sheath 2, often also called an inner liner, e.g. of cross linked PE. Inside the inner liner 2 the pipe comprises an inner armouring layer 1, called a carcass. On the outer side of the inner liner 2, the flexible pipe comprises three outer armouring layers 3, 4, 5. The innermost of the outer armouring layer 3 closest to the inner liner 2 is a pressure vault 3, comprising one or more strips wound at a steep angle to the centre axis of the pipe, e.g. close to 90 degrees. Around the pressure armouring layer 3, the pipe comprises a pair of cross wound tensile armouring layers 4, 5, made from wound wires and/or strips, wherein one of the tensile armouring layers 4 has an angle above 55 degree, typically between 60 and 75 degrees, and wherein the other one of the tensile armouring layers 5 has an angle below 55 degree, typically between 30 and 45 degrees. The pipe further comprises an outer polymer layer 6 protecting the armouring layer mechanically and/or against ingress of sea water.

The pressure vault comprises at least one folded metal strip as described above.

Fig. 2 shows a flexible pipe as in fig. 1 but without an inner armouring layer.

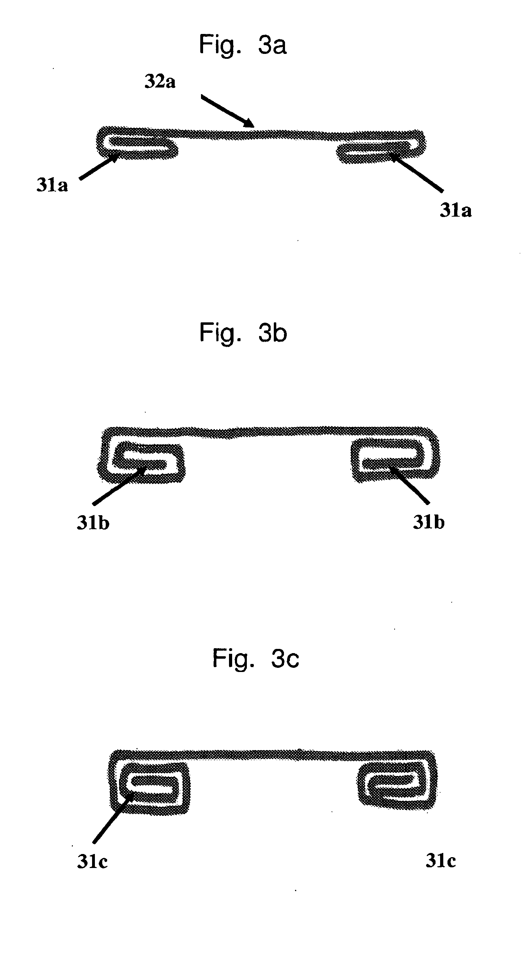

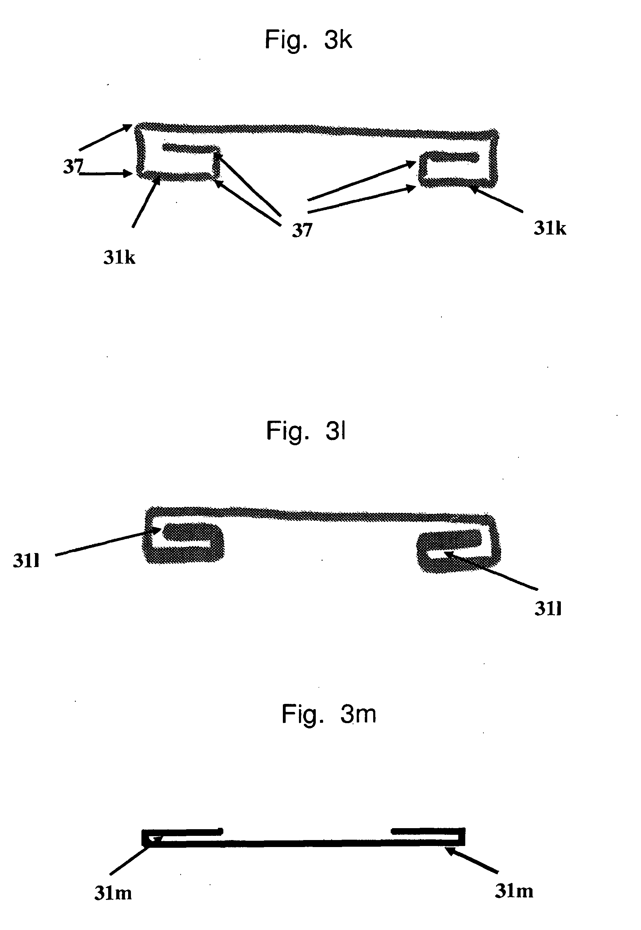

Fig. 3a shows a cross sectional side view of a folded metal strip useful in a pressure vault of the pipe of the invention. The metal strip is folded to form two edge sections 31 a, both protruding in the same direction, namely in the folding direction. The metal strip is folded against itself along its edges in two folds for each of the edge sections 31 a. The strip further comprises a non-folded mid-section 32a, between the two edge sections 31 a.

Fig. 3b shows a cross sectional side view of another folded metal strip. The metal strip is folded to form two edge sections 31 b, both protruding in the folding direction. The metal strip is folded against itself along its edges in three folds for each of the edge sections 31 b whereby each protruding edge section 31 b has 4 or more strip material layers.

Fig. 3c shows a cross sectional side view of another folded metal strip. The metal strip is folded to form two edge sections 1 c, both protruding in the folding direction. The metal strip is folded against itself along its edges in three folds for each of the edge sections 31 c whereby each protruding edge section 31 c has 5 or more strip material layers.

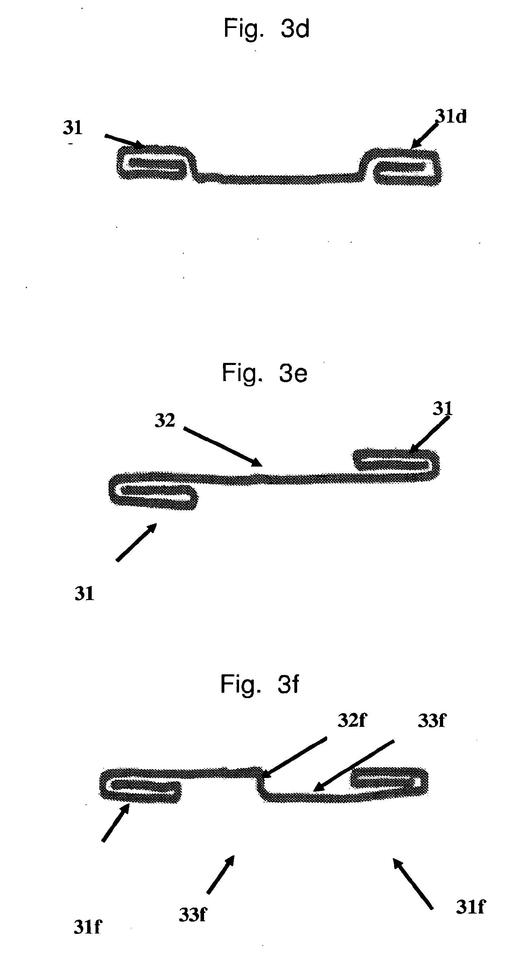

Fig. 3d shows a cross sectional side view of another folded metal strip. The metal strip is folded to form two edge sections 31 d, both protruding in the opposite direction of the folding direction.

Fig. 3e shows a cross sectional side view of another folded metal strip, where the metal strip is folded to form two edge sections 31 e, both protruding in their respective folding directions, but where their protruding directions are opposite to each other. This folded metal strip may be wound to be interlocked with itself in subsequent windings of said folded metal strip. The folded metal strip has a mid section 32e which is essentially unfolded. When applied by helically winding onto the pipe, a wire, e.g. shaped as the hoop wire described herein may be applied in either side of layer provided by the folded and interlocked metal strip to support the metal strip.

Fig. 3f shows a cross sectional side view of another folded metal strip, where the metal strip is folded to form two edge sections 31f, both protruding in their respective folding directions, but where their protruding directions are opposite to each other. This folded metal strip may be wound to be interlocked with itself in subsequent windings of said folded metal strip. The folded metal strip has a mid section 32f which is folded in a step like folding to provide a pair of trench 33f for engagement with end section 31f of the folded metal strip in a previous and a subsequent winding or end sections of one or more other folded metal strips. The trench 33f may result in an increased control of possible sliding movements of interlocked folded metal strip(s).

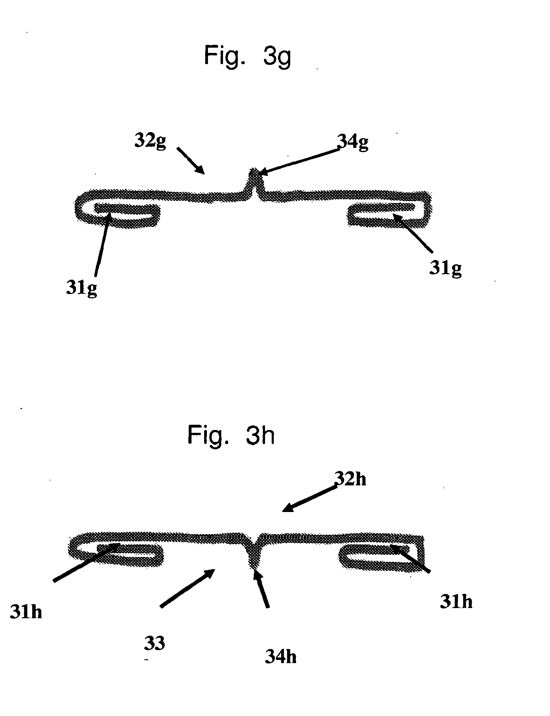

Fig. 3g shows a cross sectional side view of another folded metal strip useful in a pressure vault of the pipe of the invention. The metal strip is folded to form two edge sections 31 g, both protruding in the same direction. The strip comprises a mid-section 32g which is folded to have a ridge 34g protruding in the opposite direction than the protruding direction of the edge sections 31g. When applied onto the pipe the ridge 34g should preferably be arranged to protrude radially outwards from the longitudinal axis of the pipe.

Fig. 3h shows a cross sectional side view of another folded metal strip useful in a pressure vault of the pipe of the invention. The metal strip is folded to form two edge sections 31 h, both protruding in the same direction. The strip comprises a mid-section 32h which is folded to have a ridge 34h protruding in the same direction as the protruding direction of the edge sections 31 g. The ridge 34h provides a pair of trench 33h for engagement with end sections of one or more other folded metal strips. The trench 33h may result in an increased control of possibly sliding movements of the interlocked folded metal strips.

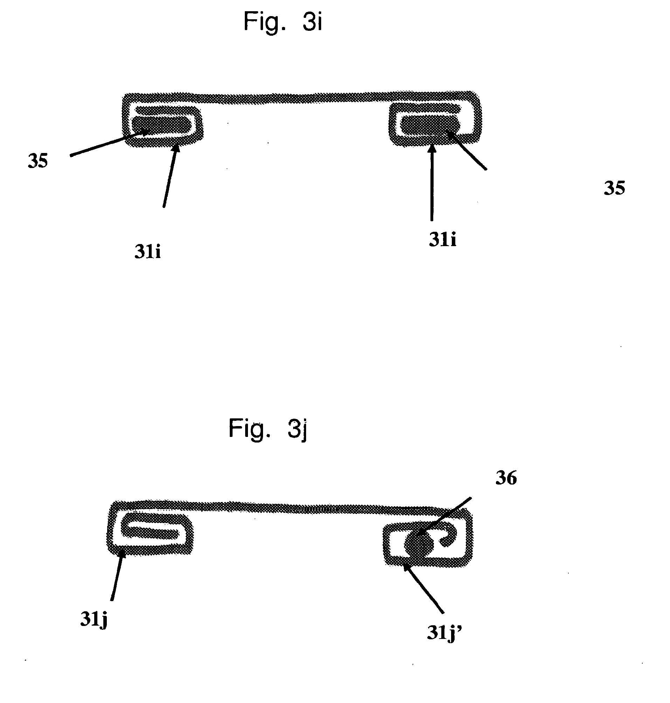

Fig. 3i shows a cross sectional side view of another folded metal strip, where the metal strip is folded to form two edge sections 31 i, both protruding in the same direction. The metal strip is in each of its edge sections 31 i folded against a secondary reinforcement element 35, which reinforcement element is thereby integrated in the fold. The reinforcement elements may be as described above.

Fig. 3j shows a cross sectional side view of another folded metal strip, where the metal strip is folded to form two edge sections 31j, 31j', both protruding in the same direction. In one of its edge sections the strip is folded against a secondary element 36, such as a fibre.

Fig. 3k shows a cross sectional side view of another folded metal strip, where the metal strip is folded to form two edge sections 31 k. As it can be seen the folded metal strip comprises deformation lines 37 for facilitating the folding.

Fig. 33l shows a cross sectional side view of another folded metal strip, where the metal strip is folded to form two edge sections 31l. As it can be seen the folded metal strip is thicker along its edge section.

Fig. 33m shows a cross sectional side view of another folded metal strip, where the metal strip is folded in only one fold along its edges to form two edge sections 31 m.

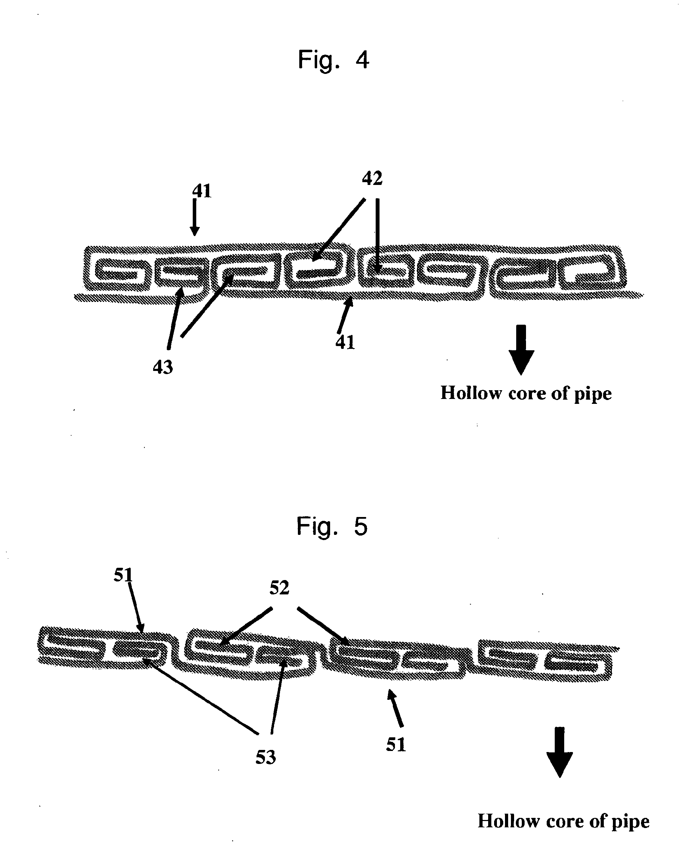

Fig. 4 shows a first pressure vault of a flexible pipe of the invention comprising interlocked folded strips. 41. The pressure vault comprises 2 or more (an even number) folded metal strips of the type shown in fig. 3b, where the folded metal strips 41 are turned opposite each other so that half of the folded metal strips comprise protruding edge sections 42 protruding towards the longitudinal axis of the pipe (here the hollow core) and the other half of the folded metal strips comprise protruding edge sections 43 protruding away from the longitudinal axis of the pipe. The folded metal strips 41 are wound helically onto the pipe so that the protruding edge sections 43 protruding away from the longitudinal axis of the pipe are interlocked with protruding edge sections 42 protruding towards the longitudinal axis of the pipe. The pressure vault may if desired comprise an additional not shown hoop layer.

Fig. 5 shows a second pressure vault of a flexible pipe of the invention comprising interlocked folded strips. 51. The pressure vault comprises one or more folded metal strips of the type shown in fig. 3f, comprising one protruding edge section 52 protruding towards the longitudinal axis of the pipe(here the hollow core), one protruding edge section 53 protruding away from the longitudinal axis of the pipe. The folded metal strip(s) 51 is/are wound helically onto the pipe so that the protruding edge section(s) 53 protruding away from the longitudinal axis of the pipe is/are interlocked with protruding edge section(s) 52 protruding towards the longitudinal axis of the pipe. The pressure vault may if desired comprise an additional not shown hoop layer.

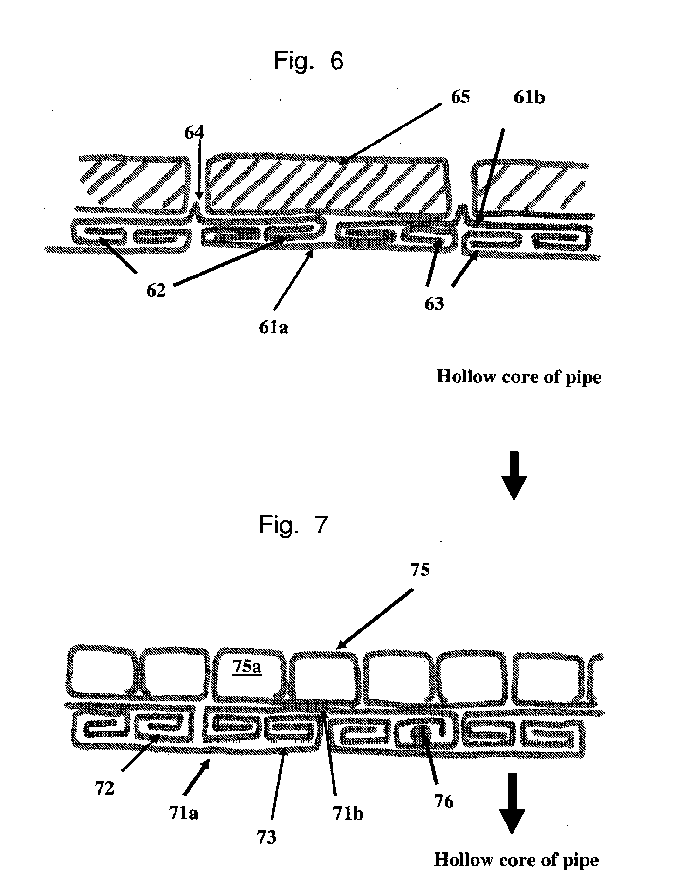

Fig. 6 shows a third pressure vault of a flexible pipe of the invention comprising interlocked folded strips 61 a, 61 b. The pressure vault comprises at least one folded metal strip 61 a of the type shown in fig. 3a comprising protruding edge sections 63, and at least one folded metal strip 61 b of the type shown in fig. 1g, protruding edge sections 62 and a ridge 64 protruding in the opposite direction than the protruding direction of the edge sections 62. The folded metal strip(s) 61 a is/are turned in relation to the pipe so that its protruding edge sections 63 protruding away from the longitudinal axis of the pipe (here the hollow core) and the folded metal strips 61 b are turned in relation to the pipe so that its protruding edge sections 62 protruding towards the hollow core of the pipe. The folded metal strips 61a, 61b are wound helically onto the pipe so that the protruding edge sections 63 protruding away from the hollow core of the pipe are interlocked with protruding edge sections 62 protruding towards the hollow core of the pipe. The pressure vault further comprises a hoop layer provided by a helically wound wire 65 (hoop wire), which in this embodiment is made from a solid material such as a metal profile. The hoop wire 65 is applied so that the ridge 64 protrudes at least partly in between at least some of the consecutive windings of the wire.

Fig. 7 shows a fourth pressure vault of a flexible pipe of the invention comprising interlocked folded strips 71 a, 71 b. The pressure vault comprises 2 or more (an even number) folded metal strips 71 a, 71 b of the type shown in fig. 3b and fig. 3j. At least one of the folded metal strips 71 b is as the folded metal strip of fig. 3j. The folded metal strips 71 a, 71 b are turned opposite each other so that half of the folded metal strips 71 a, 71 b comprise protruding edge sections 72 protruding towards the hollow core of the pipe and the other half of the folded metal strips 71 a, 71 b comprise protruding edge sections 73 protruding away from the longitudinal axis of the pipe (here the hollow core). The folded metal strips 71 a, 71 b are wound helically onto the pipe so that the protruding edge sections 73 protruding away from the hollow core of the pipe are interlocked with protruding edge sections 72 protruding towards the hollow core of the pipe. The folded metal strip(s) 71 b comprises an integrated secondary element 76, which is folded into one of its protruding edge sections. The pressure vault further comprises a hoop layer provided by a helically wound wire 75 (hoop wire), which in this embodiment is made from a formed strip such as a metal strip, which has been formed to have one or more box sections 75a. The hoop wire 75 increases the moment of inertia.

Some preferred embodiments have been shown in the foregoing, but it should be stressed that the invention is not limited to these, but may be embodied in other ways and variations as it will be clear for the skilled person.

## Claims

1. A flexible pipe comprising a plurality of layers surrounding a longitudinal axis of the pipe, the plurality of layers comprising from inside and radially outwards an internal sheath (2), a pressure vault (3) and one or more tensile armouring layers (4,5), said pressure vault (3) comprises at least one helically wound folded metal strip, which folded metal strip is interlocked with itself in consecutive windings or interlocked with another helically wound folded metal strip, said at least one folded metal strip (31;41,51;61a,61b;71a,71b) being folded in at least two folds along both of its edges to form protruding edge sections (31a-m;42,43;52,53;62,63;72,73) of three or more strip material layers, each of said protruding edge sections (31a-m;42,43;52,53;62,63;72,73) protruding in one of the directions towards or away from the longitudinal axis of the pipe, wherein said interlocking is provided by said protruding edge sections (31a-m;42,43;52,53;62,63;72,73) of one or more folded metal strips (31;41,51;61a,61b;71a,71b) being engaged with each other, and the engaged protruding edge sections (31 am;42,43;52,53;62,63;72,73) are not folded into each others folds, said pressure vault optionally comprises at least two folded metal strips (31;41,51;61a,61b;71a,71b).

2. A flexible pipe as claimed in claim 1, wherein said protruding edge sections (31a-m;42,43;52,53;62,63;72,73) of one or more folded metal strips (31;41,51;61a,61b;71a,71b) are engaged with each other, preferably a first of said protruding edge sections (31a-m;42,43;52,53;62,63;72,73) of one or more folded metal strips (31;41,51;61a,61b;71a,71b) is engaged with a second edge section of one or more folded metal strips (31;41,51;61a,61b; 71 a,71 b), wherein said engagement is provided by the protruding of the first edge section protruding towards the longitudinal axis of the pipe and the protruding of the second edge section protruding away from the longitudinal axis of the pipe, more preferably the engaged protruding edge sections (31a-m;42,43;52,53;62,63;72,73) are not folded into each others folds and/or are not co-folded (folded together during winding).

3. A flexible pipe as claimed in any one of claim 1 and 2, wherein said pressure vault comprises at least a first folded metal strip (61a;71b) with protruding edge sections (62;72) protruding in the direction towards the longitudinal axis of the pipe, and at least a second folded metal strip (61 b;71 a) with protruding edge sections (63;73) protruding in the direction away from the longitudinal axis of the pipe, wherein the protruding edge sections (62;72) of the first folded metal strip (61 a;71 b) are engaged with the protruding edge sections (63;73) of the second folded metal strip (61 a;71 b), said first folded metal strip (61a;71b) is preferably arranged to hold together consecutive windings of said second folded metal strip (61a;71b), by engagement of said protruding edge sections (62;72;63;73).

4. A flexible pipe as claimed in any one of the preceding claims 1-3, wherein said pressure vault comprises at least a folded metal strip (31;51) with a first protruding edge section (52) protruding in the direction towards the longitudinal axis of the pipe, and a second protruding edge section (53) protruding in the direction away from the longitudinal axis of the pipe, said first protruding edge section (52) is preferably engaged with said second protruding edge section (53) in a subsequent winding of said folded metal strip (51) or said first and said second protruding edge sections being engaged with a protruding edge section of one or more other folded metal strips (31;41,51;61a,61b;71a,71b).

5. A flexible pipe as claimed in any one of the preceding claims 1-4, wherein the at least one folded metal strip (31;41,51;61a,61b;71a,71b) is folded to provide more than 3 strip material layers along both of its edges to form at least two edge sections (31a-l;42,43;52,53;62,63;72,73), each protruding in one of the directions towards or away from the longitudinal axis of the pipe.

6. A flexible pipe as claimed in any one of the preceding claims 1-5, wherein the at least one folded metal strip is folded in a folding direction, said at least one protruding edge section protruding in said folding direction.

7. A flexible pipe as claimed in any one of the preceding claims 1-6, wherein the at least one folded metal strip (31) is folded against itself to form at least one edge section (31 c) to form at least one edge section comprising four or more layers of strip material.

8. A flexible pipe as claimed in any one of the preceding claims 1-7, wherein the at least one folded metal strip (31;71b) is folded at least along one of its edges so that a secondary element (35;36;76) is integrated into the fold, said secondary element (35;36;76) preferably being an oblong element extending in essentially the whole length of the folded strip (31;71b), said secondary element (35;36;76) integrated into the fold is preferably a sensor element or an oblong metal element onto which the metal strip (31;71b) is folded to form a reinforced edge section, such as a reinforcement element with cross sectional profile which is essentially uniform along its length, the profile preferably being selected from round, ellipsoidal, semi ellipsoidal, quadrilateral polygonal, square, rectangular and trapezoidal shapes, where any edges optionally being rounded.

9. A flexible pipe as claimed in any one of the preceding claims 1-8, wherein said at least one folded metal strip (31) is folded to form two edge sections (31 a) and a non-folded mid-section (32a;32e) between the two edge sections (31 a), said non-folded mid-section (32a;32e) preferably has an essentially uniform thickness, such as a non-folded thickness Tₙₛ of 0.2 -5 mm, such as 0.2-2 mm, for example said edge sections each has an edge sections thickness T_{fs} of 1.5 to 10 times Tₙₛ, such as of 3-4 times Tₙₛ.

10. A flexible pipe as claimed in any one of the preceding claims 1-9, wherein said at least one folded metal strip (31;41,51;61a,61b;71a,71b) is folded from a metal strip having essentially uniform thickness.

11. A flexible pipe as claimed in any one of the preceding claims 1-9, wherein said at least one folded metal strip (31) is folded from a metal strip having an edge section (31l) which is thicker than a mid section, said at least one folded metal strip (31) is preferably folded from a metal strip having deformation lines along its edge sections for providing the fold.

12. A flexible pipe as claimed in any one of the preceding claims 1-11, wherein said pressure vault further comprises a hoop layer wound onto the helically wound metal strip(s), preferably said hoop layer is provided by at least one helically wound wire (65;75), the wire preferably being helically wound onto the helically wound, folded metal strip (62,63;71 a,71 b) with a winding angle with respect to the longitudinal axis of the pipe which is essentially equal to the winding angle of said helically wound, folded metal strip (62,63;71 a,71 b).

13. A flexible pipe as claimed in claim 12, wherein the windings of the wound wire (65;75) are not interlocked with each other, preferably the wire has an cross sectional profile selected from round, ellipsoidal, semi ellipsoidal, quadrilateral polygonal, square, rectangular and trapezoidal shapes, where any edges optionally being rounded,

14. A flexible pipe as claimed in claim 13, wherein the folded metal strip(s) forms a strip layer, the strip layer comprises a ridge (64) on at least one of the helically wound folded metal strips (61 b), the ridge protruding radially outwards from the longitudinal axis of the pipe, the hoop wire(s) (65) being applied so that the ridge (64) protrudes at least partly in between at least some of the consecutive windings of the wire(s) (65), preferably the strip layer comprises at least a first folded metal strip (61 b) with protruding edge sections (62) protruding in the direction towards the longitudinal axis of the pipe, and at least a second folded metal strip (61 a) with protruding edge sections (63) protruding in the direction away from the longitudinal axis of the pipe, wherein the first folded metal strip comprises a ridge (64) protruding radially outwards from the longitudinal axis of the pipe, the hoop wire(s) (65) being applied so that the ridge (64) protrudes at least partly in between at least some of the consecutive windings of the wire(s) (65).

## Patentansprüche

1. Flexibles Rohr, das eine Vielzahl von Schichten, die eine Längsachse des Rohrs umgeben, aufweist, wobei die Vielzahl von Schichten von innen und radial nach außen eine innere Hülle (2), ein Druckgewölbe (3), und ein oder mehrere Zugfestigkeitsarmierungsschichten (4, 5) aufweist, wobei das Druckgewölbe (3) mindestens einen spiralförmig gewickelten gefalteten Metallstreifen aufweist, wobei der Metallstreifen mit sich selbst in aufeinanderfolgenden Wicklungen verschränkt oder mit einem weiteren spiralförmig gewickelten gefalteten Metallstreifen verschränkt ist, wobei der mindestens eine gefaltete Metallstreifen (31; 41, 51; 61 a, 61b; 71 a, 71b) in mindestens zwei Falten entlang seiner beiden Kanten gefaltet ist, um überstehende Kantenabschnitte (31a-m; 42, 43; 52, 53; 62, 63; 72, 73) aus drei oder mehr Streifenmaterialschichten zu bilden, wobei jeder der überstehende Kantenabschnitte (31a-m; 42, 43; 52, 53; 62, 63; 72, 73) in einer der Richtungen hin zu oder weg von der Längsachse des Rohrs übersteht, wobei die Verschränkung durch die überstehenden Kantenabschnitte (31a-m; 42, 43; 52, 53; 62, 63; 72, 73) des einen oder der mehreren ineinandergreifenden gefalteten Metallstreifen (31; 41, 51; 61a, 61b; 71a, 71b) bereitgestellt ist, und wobei die ineinandergreifenden überstehenden Kantenabschnitte (31a-m; 42, 43; 52, 53; 62, 63; 72, 73) nicht in die Falten der jeweils anderen gefaltet sind, wobei das Druckgewölbe gegebenenfalls mindestens zwei gefaltete Metallstreifen (31; 41, 51; 61a, 61b; 71a, 71b) aufweist.

2. Flexibles Rohr wie in Anspruch 1 beansprucht, wobei die überstehenden Kantenabschnitte (31a-m, 42, 43; 52, 53; 62, 63; 72, 73) aus einem oder mehreren gefalteten Metallstreifen (31; 41, 51; 61a, 61b; 71a, 71b) ineinandergreifen, wobei vorzugsweise ein erster der überstehenden Kantenabschnitte (31a-m, 42, 43; 52, 53; 62, 63; 72, 73) aus einem oder mehreren gefalteten Metallstreifen (31; 41, 51; 61a, 61b; 71a, 71b) in einen zweiten Kantenabschnitt aus einem oder mehreren gefalteten Metallstreifen (31; 41, 51; 61 a, 61b; 71 a, 71 b) greift, wobei das Ineinandergreifen durch Überstehen des ersten Kantenabschnitts, der in Richtung der Längsachse des Rohrs übersteht, und durch Überstehen des zweiten Kantenabschnitts, der in Richtung weg von der Längsachse des Rohres übersteht, bereitgestellt ist, wobei vorzugsweise die ineinandergreifenden überstehenden Kantenabschnitte (31 a-m; 42, 43; 52, 53; 62, 63; 72, 73) nicht in die Falten der jeweils anderen gefaltet sind und/oder sind nicht gemeinsam gefaltet sind (zusammengefaltet beim Wickeln).

3. Flexibles Rohr wie in einem der Ansprüche 1 und 2 beansprucht, wobei das Druckgewölbe mindestens einen ersten gefalteten Metallstreifen (61a; 71 b) mit überstehenden Kantenabschnitten (62; 72), die in Richtung der Längsachse des Rohres überstehen, und mindestens einen zweiten gefalteten Metallstreifen (61b; 71 a) mit überstehenden Kantenabschnitten (63; 73), die in Richtung weg von der Längsachse des Rohres überstehen, aufweist, wobei die überstehenden Kantenabschnitte (62; 72) des ersten gefalteten Metallstreifens (61a; 71b) in die überstehenden Kantenabschnitten (63; 73) des zweiten gefalteten Metallstreifen (61a; 71 b) greifen, wobei vorzugsweise der erste gefaltete Metallstreifen (61a; 71b) so angeordnet ist, dass er aufeinanderfolgende Wicklungen des zweiten gefalteten Metallstreifens (61 a; 71b) durch Ineinandergreifen der überstehenden Kantenabschnitte (62; 72; 63; 73) zusammenhält.

4. Flexibles Rohr wie in einem der vorhergehenden Ansprüche 1-3 beansprucht, wobei das Druckgewölbe mindestens einen gefalteten Metallstreifen (31; 51) mit einem ersten überstehenden Kantenabschnitt (52), der in Richtung der Längsachse des Rohres übersteht, und einem zweiten überstehenden Kantenabschnitt (53), der in Richtung weg von der Längsachse des Rohres übersteht, aufweist, wobei der erste überstehende Kantenabschnitt (52) vorzugsweise in den zweiten überstehenden Kantenabschnitt (53) in eine nachfolgende Wicklung des gefalteten Metallstreifens (51) greift, oder wobei der erste und der zweite überstehende Kantenabschnitt in einen überstehenden Kantenabschnitt eines oder mehrerer anderer gefalteter Metallstreifen (31; 41,51;
61a, 61b; 71a, 71b) greifen.

5. Flexibles Rohr wie in einem der vorhergehenden Ansprüche 1-4 beansprucht, wobei der mindestens eine gefaltete Metallstreifen (31; 41, 51; 61a, 61b; 71a, 71 b) gefaltet ist, um mehr als 3 Streifenmaterialschichten entlang seiner beiden Kanten zur Verfügung zu stellen, um mindestens zwei Kantenabschnitte (31a-m, 42, 43; 52, 53; 62, 63; 72, 73) zu bilden, welche jeweils in eine der Richtungen hin zu oder weg von der Längsachse des Rohres überstehen.

6. Flexibles Rohr wie in einem der vorhergehenden Ansprüche 1-5 beansprucht, wobei der mindestens eine gefaltete Metallstreifen in eine Faltrichtung gefaltet ist, wobei der mindestens eine überstehende Kantenabschnitt in Faltrichtung übersteht.

7. Flexibles Rohr wie in einem der vorhergehenden Ansprüche 1-6 beansprucht, wobei der mindestens eine gefaltete Metallstreifen (31) gegen sich selbst gefaltet ist, um mindestens einen Kantenabschnitt (31 c) zu bilden, um mindestens einen Kantenabschnitt zu bilden, der vier oder mehr Schichten von Streifenmaterial aufweist.

8. Flexibles Rohr wie in einem der vorhergehenden Ansprüche 1-7 beansprucht, wobei der mindestens eine gefaltete Metallstreifen (31;71b) mindestens entlang einer seiner Kanten so gefaltet ist, dass ein Sekundärelement (35; 36; 76) in die Falte integriert ist, wobei das Sekundärelement (35; 36; 76) vorzugsweise ein längliches Element ist, das sich im Wesentlichen über die gesamte Länge des gefalteten Streifens (31; 71b) erstreckt, wobei das in die Falte integrierte Sekundärelement (35; 36; 76) vorzugsweise ein Sensorelement oder ein längliches Metallelement ist, auf welches der Metallstreifen (31; 71 b) gefaltet ist, um einen verstärkten Kantenabschnitt zu bilden, wie etwa ein Verstärkungselement mit Querschnittsprofil, das im Wesentlichen einheitlich entlang seiner Länge ist, wobei das Profil vorzugsweise aus runden, ellipsenförmigen, halbellipsenförmigen, viereckig polygonalen, quadratischen, rechteckigen und trapezförmigen Formen, in denen alle Kanten gegebenenfalls abgerundet sind, ausgewählt ist.

9. Flexibles Rohr wie in einem der vorhergehenden Ansprüche 1-8 beansprucht, wobei der mindestens eine gefaltete Metallstreifen (31) gefaltet ist, um zwei Kantenabschnitte (31a) und einen nicht gefalteten Mittelabschnitt (32a; 32e) zwischen den beiden Kantenabschnitten (31a) zu bilden, wobei der nicht gefaltete Mittelabschnitt (32a; 32e) vorzugsweise eine im Wesentlichen einheitliche Stärke hat, wie etwa eine nicht gefaltete Stärke Tₙₛ von 0,2-5 mm, wie etwa 0,2-2 mm, wobei beispielsweise die Kantenabschnitte jeweils eine Kantenabschnittsstärke T_{fs} von 1,5 bis 10 mal Tₙₛ, wie etwa 3-4 mal Tₙₛ haben.

10. Flexibles Rohr wie in einem der vorhergehenden Ansprüche 1-9 beansprucht, wobei der mindestens eine gefaltete Metallstreifen (31; 41, 51; 61a, 61b; 71a, 71 b) aus einem Metallstreifen mit im Wesentlichen gleichmäßiger Stärke gefaltet ist.

11. Flexibles Rohr wie in einem der vorhergehenden Ansprüche 1-9 beansprucht, wobei der mindestens eine gefaltete Metallstreifen (31) aus einem Metallstreifen gefaltet ist, der einen Kantenabschnitt (31l) hat, der dicker ist als ein Mittelabschnitt, wobei der mindestens eine gefaltete Metallstreifen (31) vorzugsweise aus einem Metallstreifen gefaltet ist, der Verformungslinien entlang seiner Kantenabschnitte hat, um die Falte bereitzustellen.

12. Flexibles Rohr wie in einem der vorhergehenden Ansprüche 1-11 beansprucht, wobei das Druckgewölbe ferner eine Reifenschicht (hoop layer) aufweist, die auf den/die spiralförmig gewickelten Metallstreifen gewickelt ist, wobei vorzugsweise die Reifenschicht durch mindestens einen spiralförmig gewickelten Draht (65; 75) bereitgestellt ist, wobei der Draht vorzugsweise spiralförmig auf den spiralförmig gewickelten, gefalteten Metallstreifen (62, 63; 71a, 71b) mit einem Wickelwinkel in Bezug auf die Längsachse des Rohres, der im Wesentlichen gleich dem Wickelwinkel des spiralförmig gewickelten gefalteten Metallstreifens (62, 63; 71a, 71 b) ist, gewickelt ist.

13. Flexibles Rohr wie in Anspruch 12 beansprucht, wobei die Wicklungen des gewickelten Drahtes (65; 75) nicht miteinander verschränkt sind, wobei vorzugsweise der Draht ein Querschnittsprofil hat, das aus runden, ellipsenförmigen, halbellipsenförmigen, viereckig polygonalen, quadratischen, rechteckigen und trapezförmigen Formen, in denen alle Kanten gegebenenfalls abgerundet sind, ausgewählt ist.

14. Flexibles Rohr wie in Anspruch 13 beansprucht, wobei der/die gefaltete(n) Metallstreifen eine Streifenschicht bildet/bilden, wobei die Streifenschicht eine Erhöhung (ridge) (64) auf mindestens einem der spiralförmig gewickelten gefalteten Metallstreifen (61b) aufweist, wobei die Erhöhung radial nach außen bezüglich der Längsachse des Rohrs übersteht, wobei der Reifendraht/die Reifendrähte (hoop wires) (65) so angebracht ist/sind, dass die Erhöhung (64) zumindest teilweise zwischen zumindest einige der aufeinanderfolgenden Wicklungen des Drahtes/der Drähte hinein (65) übersteht, wobei die Streifenschicht vorzugsweise mindestens einen ersten gefalteten Metallstreifen (61b) mit überstehenden Kantenabschnitten (62), die in Richtung der Längsachse des Rohres überstehen, und mindestens einen zweiten gefalteten Metallstreifen (61a) mit überstehenden Kantenabschnitten (63), die in Richtung weg von der Längsachse des Rohrs überstehen, aufweist, wobei der erste gefaltete Metallstreifen eine Erhöhung (64) aufweist, die radial nach außen bezüglich der Längsachse des Rohrs übersteht, wobei die Reifendrähte (65) so angebracht sind, dass die Erhöhung (64) zumindest teilweise zwischen zumindest einige der aufeinanderfolgenden Wicklungen der Drähte (65) hinein übersteht.

## Revendications

1. Tuyau souple comprenant une pluralité de couches entourant un axe longitudinal du tuyau, la pluralité de couches comprenant, depuis l'intérieur et radialement vers l'extérieur, une gaine interne (2), une voûte de pression (3) et une ou plusieurs couches de blindage de traction (4, 5), ladite voûte de pression (3) comprenant au moins une bande métallique pliée enroulée de façon hélicoïdale, ladite bande métallique pliée étant enchevêtrée sur elle-même en enroulements consécutifs ou emboîtée dans une autre bande métallique pliée enroulée de façon hélicoïdale, ladite au moins une bande métallique pliée (31 ; 41, 51 ; 61a, 61b ; 71a, 71b) étant pliée en au moins deux plis le long de ses deux bords afin de former des sections de bord saillantes (31a-m ; 42, 43 ; 52, 53 ; 62, 63 ; 72, 73) de trois, ou plus, couches de matériau en bande, chacune desdites sections de bord saillantes (31a-m ; 42, 43 ; 52, 53 ; 62, 63 ; 72, 73) faisant saillie dans l'une des directions vers l'axe longitudinal du tuyau ou loin de ce dernier, dans lequel ledit enchevêtrement est créé par lesdites sections de bord saillantes (31a-m ; 42, 43 ; 52, 53 ; 62, 63 ; 72, 73) d'une ou de plusieurs bandes métalliques pliées (31 ; 41, 51 ; 61a, 61b ; 71a, 71b) qui s'engrènent mutuellement, et les sections de bord saillantes engrenées (31a-m ; 42, 43 ; 52, 53 ; 62, 63 ; 72, 73) ne se plient pas dans les plis des unes des autres, ladite voûte de pression comprenant éventuellement au moins deux bandes métalliques pliées (31 ; 41, 51 ; 61a, 61b ; 71a, 71b).

2. Tuyau souple selon la revendication 1, dans lequel lesdites sections de bord saillantes (31a-m ; 42, 43 ; 52, 53 ; 62, 63 ; 72, 73) d'une ou de plusieurs bandes métalliques pliées (31 ; 41, 51 ; 61a, 61b ; 71a, 71b) s'engrènent mutuellement, de préférence une première desdites sections de bord saillantes (31a-m ; 42, 43 ; 52, 53 ; 62, 63 ; 72, 73) d'une ou de plusieurs bandes métalliques pliées (31 ; 41, 51 ; 61a, 61b ; 71a, 71b) s'engrène avec une seconde section de bord saillante d'une ou de plusieurs bandes métalliques pliées (31 ; 41, 51 ; 61a, 61b ; 71a, 71b), dans lequel ledit engrènement est créé par la saillie de la première section de bord faisant saillie vers l'axe longitudinal du tuyau et la saillie de la seconde section de bord faisant saillie loin de l'axe longitudinal du tuyau, plus préférablement les sections de bord saillantes engrenées (31a-m ; 42, 43 ; 52, 53 ; 62, 63 ; 72, 73) ne se pas plient pas dans les plis des unes des autres et/ou ne sont pas co-pliées (pliées ensemble pendant l'enroulement).

3. Tuyau souple selon l'une quelconque des revendications 1 et 2, dans lequel ladite voûte de pression comprend au moins une première bande métallique pliée (61a ; 71b) dotée de sections de bord saillantes (62 ; 72) faisant saillie dans la direction vers l'axe longitudinal du tuyau, et au moins une seconde bande métallique pliée (61b ; 71a) dotée de sections de bord saillantes (63 ; 73) faisant saillie dans la direction loin de l'axe longitudinal du tuyau, dans lequel les sections de bord saillantes (62 ; 72) de la première bande métallique pliée (61a ; 71b) s'engrènent avec les sections de bord saillantes (63 ; 73) de la seconde bande métallique pliée (61a ; 71b), ladite première bande métallique pliée (61a ; 71b) est de préférence agencée pour maintenir ensemble des enroulements consécutifs de ladite seconde bande métallique pliée (61a ; 71b), par engrènement desdites sections de bord saillantes (62 ; 72 ; 63 ; 73).

4. Tuyau souple selon l'une quelconque des revendications 1 à 3, dans lequel ladite voûte de pression comprend au moins une bande métallique pliée (31 ; 51) dotée d'une première section de bord saillante (52) faisant saillie dans la direction vers l'axe longitudinal du tuyau, et d'une seconde section de bord saillante (53) faisant saillie dans la direction loin de l'axe longitudinal du tuyau, ladite première section de bord saillante (52) est préférence engrenée avec ladite seconde section de bord saillante (53) en un enroulement suivant de ladite bande métallique pliée (51) ou lesdites première et seconde sections de bord saillantes s'engrenant avec une section de bord saillante d'une ou de plusieurs autres bandes métalliques pliées (31 ; 41, 51 ; 61a, 61b ; 71a, 71b).

5. Tuyau souple selon l'une quelconque des revendications 1 à 4, dans lequel la au moins une bande métallique pliée (31 ; 41, 51 ; 61a, 61b ; 71a, 71b) est pliée pour créer plus de 3 couches de matériau en bande le long de ses deux bords afin de former au moins deux sections de bord (31a-l ; 42, 43 ; 52, 53 ; 62, 63 ; 72, 73), chacune faisant saillie dans l'une des directions vers l'axe longitudinal du tuyau ou loin de ce dernier.

6. Tuyau souple selon l'une quelconque des revendications 1 à 5, dans lequel la au moins une bande métallique pliée est pliée dans une direction de pliage, ladite au moins une section de bord saillante faisant saillie dans ladite direction de pliage.

7. Tuyau souple selon l'une quelconque des revendications 1 à 6, dans lequel la au moins une bande métallique pliée (31) est pliée contre elle-même pour former au moins une section de bord (31c) afin de former au moins une section de bord comprenant quatre couches ou plus de matériau en bande.

8. Tuyau souple selon l'une quelconque des revendications 1 à 7, dans lequel la au moins une bande métallique pliée (31 ; 71b) est pliée au moins le long d'un de ses bords de sorte qu'un élément secondaire (35 ; 36 ; 76) soit intégré dans le pli, ledit élément secondaire (35 ; 36 ; 76) étant de préférence un élément oblong s'étendant pratiquement sur toute la longueur de la bande pliée (31 ; 71b), ledit élément secondaire (35 ; 36 ; 76) intégré dans le pli est de préférence un élément capteur ou un élément métallique oblong sur lequel la bande métallique (31 ; 71b) est pliée afin de former une section de bord renforcée, comme un élément de renforcement au profil de coupe transversale qui est essentiellement uniforme sur sa longueur, le profil étant de préférence choisi parmi les formes ronde, ellipsoïdale, semi-ellipsoïdale, polygonale quadrilatère, carrée, rectangulaire et trapézoïdale, où tout bord est éventuellement arrondi.

9. Tuyau souple selon l'une quelconque des revendications 1 à 8, dans lequel ladite au moins une bande métallique pliée (31) est pliée pour former deux sections de bord (31a) et une section intermédiaire non pliée (32a ; 32e) entre les deux sections de bord (31a), ladite section intermédiaire non pliée (32a ;
32e) a de préférence une épaisseur essentiellement homogène, telle qu'une épaisseur non pliée Tₙₛ de 0,2 à 5 mm, telle que de 0,2 à 2 mm, par exemple lesdites sections de bord ont chacune une épaisseur de section de bord T_{fs} faisant de 1,5 à 10 fois Tₙₛ, comme de 3 à 4 fois Tₙₛ.

10. Tuyau souple selon l'une quelconque des revendications 1 à 9, dans lequel ladite au moins une bande métallique pliée (31 ; 41, 51 ; 61a, 61b ; 71a, 71b) est pliée depuis une bande métallique ayant une épaisseur essentiellement uniforme.

11. Tuyau souple selon l'une quelconque des revendications 1 à 9, dans lequel ladite au moins une bande métallique pliée (31) est pliée depuis une bande métallique ayant une section de bord (311) qui est plus épaisse qu'une section intermédiaire, ladite au moins une bande métallique pliée (31) est de préférence pliée depuis une bande métallique ayant des lignes de déformation le long de ses sections de bord pour créer le pli.

12. Tuyau souple selon l'une quelconque des revendications 1 à 11, dans lequel ladite voûte de pression comprend en outre une couche de frettage enroulée sur la(les) bande(s) métallique(s) enroulée(s) de façon hélicoïdale, de préférence ladite couche de frettage est créée par au moins un fil (65 ; 75) enroulé de façon hélicoïdale, le fil étant de préférence enroulé de façon hélicoïdale sur la bande métallique pliée enroulée de façon hélicoïdale (62, 63 ; 71a, 71b) selon un angle d'enroulement par rapport à l'axe longitudinal du tuyau qui est essentiellement égal à l'angle d'enroulement de ladite la bande métallique pliée enroulée de façon hélicoïdale (62, 63 ; 71a, 71b).

13. Tuyau souple selon la revendication 12, dans lequel les enroulements du fil enroulé (65 ; 75) ne s'enchevêtrent pas les uns avec les autres, de préférence le fil a un profil de coupe transversale choisi parmi les formes ronde, ellipsoïdale, semi-ellipsoïdale, polygonale quadrilatère, carrée, rectangulaire et trapézoïdale, où tout bord est éventuellement arrondi.

14. Tuyau souple selon la revendication 13, dans lequel la(les) bande(s) métallique(s) pliée(s) forme(nt) une couche en bande, la couche en bande comprend une arête (64) sur au moins une des bandes métalliques pliées enroulées de façon hélicoïdale (61b), l'arête faisant saillie radialement vers l'extérieur depuis l'axe longitudinal du tuyau, le(s) fil(s) de frettage (65) étant appliqué de sorte que l'arête (64) fasse saillie au moins partiellement entre au moins certains des enroulements consécutifs du(des) fil(s) (65), de préférence la couche en bande comprend au moins une première bande métallique pliée (61b) dotée de sections de bord saillantes (62) faisant saillie dans la direction vers l'axe longitudinal du tuyau, et au moins une seconde bande métallique pliée (61a) dotée de sections de bord saillantes (63) faisant saillie dans la direction loin de l'axe longitudinal du tuyau, dans lequel la première bande métallique pliée comprend une arête (64) faisant saillie radialement vers l'extérieur depuis l'axe longitudinal du tuyau, le(s) fil(s) de frettage (65) étant appliqué(s) de sorte que l'arête (64) fasse saillie au moins partiellement entre au moins certains des enroulements consécutifs du(des) fil(s) (65).
